# EUROPÄISCHE PATENTSCHRIFT

(11) **EP 0 476 599 B1**
(45) Veröffentlichungstag und Bekanntmachung des Hinweises auf die Patenterteilung: **11.01.1995**
(21) Anmeldenummer: 91115789.9
(22) Anmeldetag: 18.09.1991
(51) Int. Cl.: B60T 17/00, F02M 25/06, F04B 35/00

(54) **Verfahren zur Entsorgung von mit Öl vermischten flüssigen Rückständen sowie entsprechendes Fahrzeug**
Process for disposal of liquid residual products mixed with oil, and corresponding vehicle
Procédé de dépollution de produits résiduels liquides mélangés avec de l'huile et véhicule correspondant

(30) Priorität: 18.09.1990 DE 4029514
(43) Veröffentlichungstag der Anmeldung: 25.03.1992
(73) Patentinhaber: Franz Plasser Bahnbaumaschinen- Industriegesellschaft m.b.H., 1010 Wien (AT)
(72) Erfinder: Theurer, Josef, A-1010 Wien (AT); Gruber, Leopold Rudolf, A-3270 Scheibbs (AT)
(74) Vertreter: Rau, Manfred, Dr. Dipl.-Ing.

(56) Entgegenhaltungen:
- GB-A- 2 201 356
- US-A- 4 011 847
- US-A- 4 677 957

## Beschreibung

Die Erfindung betrifft ein Verfahren zur Entsorgung von mit Öl vermischten flüssigen Rückständen, die aus dem Druckmedium eines durch einen Verbrennungsmotor mit Energie versorgten gegenüber dem Verbrennungsmotor gesonderten Luft- oder Hydraulik-Drucksystems abgesondert werden, sowie ein Fahrzeug zur Durchführung dieses Verfahrens.

Derartige durch sogenannte Abscheider aus dem Druckmedium abgesonderte Rückstände, beispielsweise in Form einer Emulsion aus Öl und Wasser, fallen zwar nur tropfenweise an, ergeben jedoch insbesondere in Verbindung mit sehr häufig im Einsatz stehenden Fahrzeugen, wie z.B. Schienenfahrzeugen, ein über längere Zeiträume hinweg nicht zu vernachlässigendes Problem. Die vom Abscheider tropfenweise abgegebene Emulsion wurde unter völliger Mißachtung von umwelttechnischen Folgen bis vor kurzem generell auf den Fahrweg fallengelassen. Erst in letzter Zeit wurde gelegentlich von verschiedenen Bahngesellschaften die Forderung an die Fahrzeughersteller erhoben, eine praktikable Vorrichtung für eine uneingeschränkte Entsorgung der von den Abscheidern abgegebenen Rückstände zu entwickeln. Zu diesem Zweck wurde bereits die Installierung eines Sammelbehälters vorgeschlagen, der zur Aufnahme der anfallenden Emulsion durch eine Verbindungsleitung an den Abscheider angeschlossen ist. Mit dieser vorgeschlagenen Lösung ist zwar vorerst eine Entsorgung durchführbar, es ist jedoch damit in weiterer Folge eine Reihe von organisatorischen Problemen verbunden, um die vollen Sammelbehälter rechtzeitig auszutauschen und fachgerecht zu entsorgen. Ein weiterer Nachteil ist darin zu sehen, daß die fachgerechte Entsorgung zu einem Großteil vom Verantwortungsbewußtsein der betreffenden Bedienungsperson abhängig ist.

Die Aufgabe der Erfindung liegt daher in der Schaffung eines der gattungsgemäßen Art entsprechenden Verfahrens und eines Fahrzeuges, mit dem bei einfachem konstruktivem Mehraufwand eine automatische Entsorgung der vom Abscheider abgegebenen Rückstände durchführbar ist.

Diese Aufgabe wird erfindungsgemäß dadurch gelöst, daß die aus dem Druckmedium abgesonderten Rückstände dem Verbrennungsraum des Verbrennungsmotors zugeführt werden. Durch dieses technisch sehr einfach durchführbare Verfahren ist eine sofortige Entsorgung der in geringen Mengen anfallenden Rückstände möglich, wobei die Ölanteile im Verbrennungsraum des Motors, ohne diesen in irgendeiner Weise nachteilig zu beeinflussen, sofort verbrannt und gegebenenfalls vorhandene Wasseranteile verdampft werden. Da die Zuführung der durch den Abscheider abgegebenen Rückstände automatisch durchführbar ist, kann eine beispielsweise durch Schlamperei einer Bedienungsperson mögliche Beeinträchtigung der Entsorgung zuverlässig ausgeschlossen werden. Ein weiterer besonderer Vorteil dieses Verfahrens liegt auch darin, daß mit lediglich geringem Aufwand auch bereits im Einsatz befindliche Motoren nachrüstbar sind.

Die Erfindung bezieht sich auch auf ein Fahrzeug mit einem eine Ansaugleitung für die Verbrennungsluft bzw. das Luft-Kraftstoffgemisch aufweisenden Verbrennungsmotor und einem durch diesen mit Energie versorgbaren, gegenüber dem Verbrennungsmotor gesonderten Luft- oder Hydraulik-Drucksystem, das wenigstens einen zum Absondern von im Druckmedium unerwünschten Beimengungen ausgebildeten Abscheider aufweist. Die Erfindung besteht nun darin, daß zwischen Abscheider und der Ansaugleitung eine Verbindungsleitung vorgesehen ist. Durch eine derartige einfach herstellbare Verbindungsleitung ist eine problemlose und vollständige, automatische Übergabe der Rückstände in den Verbrennungsraum möglich, wobei die Ansaugströmung sowie der geringfügige Unterdruck in der Ansaugleitung den Übergabetransport unterstützen. Außerdem ist mit der vorgeschlagenen Lösung eine Beeinträchtigung der Motorfunktionen ausgeschlossen.

Eine vorteilhafte Weiterbildung der Erfindung besteht darin, daß die Verbindungsstelle zwischen der Verbindungsleitung und der Motor-Ansaugleitung zwischem dem Verbrennungsraum und der Verbindungsstelle zwischen Motor-Ansaugleitung und Luftpresser-Ansaugleitung angeordnet ist. Damit wird zuverlässig ausgeschlossen, daß durch die Luftpresser-Ansaugleitung wieder die vom Abscheider kommenden Rückstände aufgenommen werden.

Schließlich besteht noch eine weitere vorteilhafte Ausführungsform der Erfindung darin, daß die Verbindungsleitung in Richtung vom Abscheider zur Ansaugleitung ein Gefälle aufweist, wodurch eine stauungsfreie und gleichmäßige Überführung der Rückstände in den Verbrennungsraum sichergestellt ist.

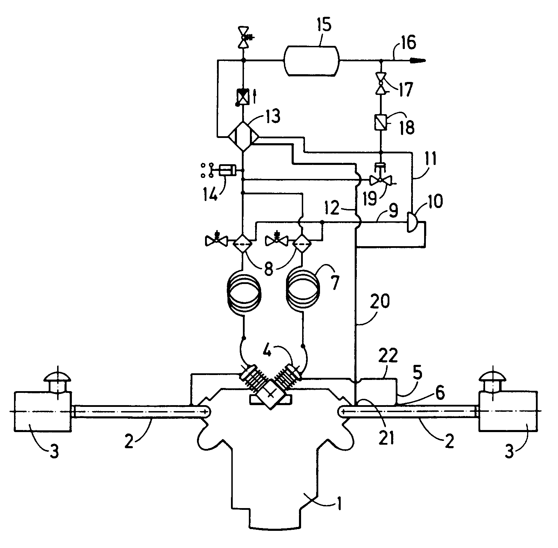

Im folgenden wird die Erfindung anhand eines in der Zeichnung schematisch dargestellten Ausführungsbeispieles näher beschrieben.

Ein Verbrennungsmotor 1 mit Ansaugleitungen 2 und Luftfilter 3 ist mit einem als Kolbenkompressor ausgebildeten Luftpresser 4 verbunden. Dieser steht durch eine Luftpresser-Ansaugleitung 5 mit der Motor-Ansaugleitung 2 unter Bildung einer Verbindungsstelle 6 in Verbindung. Einer mit dem Luftpresser 4 verbundenen Kühlschlange 7 ist ein mit einem Sicherheitsventil in Verbindung stehender Abscheider 8 in Form eines Tropfbechers zugeordnet. Dieser Abscheider 8 steht über eine Verbindungsleitung 9 mit einem zwangsgesteuerten und geheizten Entwässerungsventil 10 in Verbindung.

Dieses steht wiederum über eine Leitung 11 mit einem ebenfalls als Abscheider 13 wirksamen Lufttrockner in Verbindung. Von diesem führt eine weitere Leitung 12 zu einer Verbindungsleitung 20, die unter Bildung einer Verbindungsstelle 21 zur Ansaugleitung 2 führt. Eine Luftpresser-Ansaugleitung 22 steht unter Bildung einer Verbindungsstelle 6 mit der Motor-Ansaugleitung 2 in Verbindung und ermöglicht damit die Ansaugung von gefilterter Luft für den Luftpresser 4. Wie in der Zeichnung deutlich ersichtlich, ist die Verbindungsstelle 21 näher zum Verbrennungsraum angeordnet als die Verbindungsstelle 6 der Luftpresser-Ansaugleitung 22. Für eine problemlose und selbsttätige Zuführung der Rückstände in die Verbrennungsräume des Motors 1 ist es von Vorteil, wenn die Abscheider 8,13 gegenüber den Verbrennungsräumen ein höheres Niveau aufweisen.

Zusätzlich zu dem dargestellten Druckluftsystem besteht natürlich auch die Möglichkeit, in einem Hydrauliksystem befindliche, ebenfalls als Abscheider wirksame Entlüfter durch eine entsprechende Verbindungsleitung an die Ansaugleitung 2 des Motors 1 anzuschließen. Mit 14 ist ein Druckschalter für den Abscheider bzw. Lufttrockner 13 bezeichnet. Eine mit einem Luftbehälter 15 in Verbindung stehende Leitung 16 führt zu einem nicht näher dargestellten Bremssystem eines Fahrzeuges. Ein Durchgangshahn 17, ein Leerlaufregler 18 und ein Leerlaufventil 19 sind für die Leerlaufregelung vorgesehen.

## Patentansprüche

1. Verfahren zur Entsorgung von mit Öl vermischten flüssigen Rückständen, die aus dem Druckmedium eines durch einen Verbrennungsmotor (1) mit Energie versorgten, gegenüber dem Verbrennungsmotor (1) gesonderten Luft- oder Hydraulik-Drucksystems abgesondert werden, dadurch gekennzeichnet, daß die aus dem Druckmedium abgesonderten Rückstände dem Verbrennungsraum des Verbrennungsmotors (1) zugeführt werden.

2. Fahrzeug mit einem eine Ansaugleitung (2) für die Verbrennungsluft bzw. das Luft-Kraftstoffgemisch aufweisenden Verbrennungsmotor (1) und einem durch diesen mit Energie versorgbaren, gegenüber dem Verbrennungsmotor (1) gesonderten Luft- oder Hydraulik-Drucksystem, das wenigstens einen zum Absondern von im Druckmedium unerwünschten Beimengungen ausgebildeten Abscheider (8, 13) aufweist, dadurch gekennzeichnet, daß zwischen Abscheider (8, 13) und der Ansaugleitung (2) eine Verbindungsleitung (9, 12, 20) vorgesehen ist.

3. Fahrzeug mit einer in die einen Luftfilter (3) aufweisenden Ansaugleitung (2) des Verbrennungsmotors (1) mündenden Luftpresser-Ansaugleitung (22) für einen Luftpresser (4) nach Anspruch 2, dadurch gekennzeichnet, daß die Verbindungsstelle (21) zwischen der Verbindungsleitung (20) und der Ansaugleitung (2) zwischen dem Verbrennungsraum und der Verbindungsstelle (23) zwischen Ansaugleitung (2) und Luftpresser-Ansaugleitung (22) angeordnet ist.

4. Fahrzeug nach Anspruch 2 oder 3, dadurch gekennzeichnet, daß die Verbindungsleitung (9, 12, 20) in Richtung vom Abscheider (8, 13) zur Ansaugleitung (2) ein Gefälle aufweist.

## Claims

1. A process for the disposal of liquid residual products mixed with oil which are eliminated from the pressure medium of an air or hydraulic pressure system supplied with energy by an internal combustion engine (1) and isolated from the internal combustion engine (1), characterized in that the residual products eliminated from the pressure medium are supplied to the combustion chamber of the internal combustion engine (1).

2. A vehicle with an internal combustion engine (1) having an intake duct (2) for the combustion air or the air-fuel mixture and an air or hydraulic pressure system which can be supplied with energy by the said internal combustion engine and is isolated from the internal combustion engine (1), the said air or hydraulic pressure system having at least one separator (8, 13) designed to eliminate unwanted impurities in the pressure medium, characterized in that a connecting duct (9, 12, 20) is provided between the separator (8, 13) and the intake duct (2).

3. A vehicle with an air compressor intake duct (22) for an air compressor (4) which leads into the intake duct (2), comprising an air filter (3), of the internal combustion engine (1), according to claim 2, characterized in that the junction point (21) between the connecting duct (20) and the intake duct (2) is located between the combustion chamber and the junction point (23) [sic] between the intake duct (2) and the air compressor intake duct (22).

4. A vehicle according to claim 2 or 3, characterized in that the connecting duct (9, 12, 20) has a descending gradient in the direction from the separator (8, 13) to the intake duct (2).

## Revendications

1. Procédé pour éliminer des résidus liquides mélangés à de l'huile, qui sont séparés du milieu sous pression d'un système à pression d'air ou hydraulique alimenté en énergie par un moteur à combustion interne (1), séparé par rapport au moteur à combustion interne (1), caractérisé en ce qu'on transmet les résidus éliminés du milieu sous pression à l'enceinte de combustion du moteur à combustion interne (1).

2. Véhicule comprenant un moteur à combustion interne (1) présentant un conduit d'aspiration (2) pour l'air de combustion ou le mélange d'air-combustible et un système à pression d'air ou hydraulique pouvant être alimenté par celui-ci en énergie, séparé par rapport au moteur à combustion interne (1), qui présente au moins un piège (8,13) réalisé pour éliminer des impuretés non souhaitées dans le milieu sous pression, caractérisé en ce qu'il est prévu entre le piège (8,13) et le conduit d'aspiration (2) un conduit de liaison (9,12, 20).

3. Véhicule comprenant un conduit d'aspiration de compresseur d'air (22) débouchant dans le conduit d'aspiration (2) pourvu d'un filtre à air (3) du moteur à combustion interne (1) pour un compresseur d'air (4) selon la revendication 2, caractérisé en ce que l'endroit de liaison (21) entre le conduit de liaison (20) et le conduit d'aspiration (2) est disposé entre l'enceinte de combustion et l'endroit de liaison (23) entre le conduit d'aspiration (2) et le conduit d'aspiration de compresseur d'air (22).

4. Véhicule selon la revendication 2 ou 3, caractérisé en ce que le conduit de liaison (9, 12, 20) présente une inclinaison dans la direction du piège (8,13) vers le conduit d'aspiration (2).
